# EUROPÄISCHE PATENTANMELDUNG

(11) **EP 1 717 892 A1**
(43) Veröffentlichungstag der Anmeldung: **02.11.2006**
(21) Anmeldenummer: 06014808.7
(22) Anmeldetag: 11.04.2002
(51) Int. Cl.: H01M 8/04

(54) **Verfahren zur Regelung eines Brennstoffzellenluftversorgungssystems**

(30) Priorität: 22.04.2001 DE 10120947
(62) Teilanmeldung aus: 02747272.9
(71) Anmelder: DaimlerChrysler AG, 70567 Stuttgart (DE)
(72) Erfinder: Stute, Manfred, 73730 Esslingen (DE); Sumser, Siegfried, 70327 Stuttgart (DE); Finger, Helmut, 70771 Leinfelden-Echterdingen (DE); Fledersbacher, Peter, 70619 Stuttgart (DE); Konrad, Gerhard, Dr., 89081 Ulm (DE); Löffler, Paul, 70199 Stuttgart (DE)

(57) **Zusammenfassung**

Ein Verfahren dient zur Regelung einer Vorrichtung zur Luftversorgung von Brennstoffzellen mit Kompressoren. Dabei ist ein Strömungsverdichter niederdruckseitig mit einem Elektromotor verbunden und ein weiterer in Reihe nachgeschalteter Hochdruckverdichter der Strömungsmaschinenbauart mit einer Turbine als Freiläufer fest gekoppelt. Diese ist mit der Austrittsverrohrung der Brennstoffzelle verbunden, wobei nach dem Hochdruckverdichter vor der Brennstoffzelle eine Verbindungsleitung zur Austrittsverrohrung der Brennstoffzelle führt. In die Verbindungsleitung ist ein regelbares Ventil eingebracht. Im Bereich um die Turbine des Freiläufers oder innerhalb der Turbine liegen variable Elemente bzgl. der Strömungsquerschnitte vor, die über die Betätigungseinrichtung mit einer Regelung koppelbar sind.

Dabei ist der variable engste Querschnitt im Bereich um die Turbine oder innerhalb der Turbine entsprechend dem vorhandenen Massenstrom und der Turbineneintrittstemperatur mittels der Betätigungseinrichtung in Abhängigkeit vom Regelungssignal derart geregelt verändert wird, dass sich der Soll-Eintrittsluftdruck der Brennstoffzelle einstellen kann.

## Beschreibung

Die Erfindung betrifft ein Verfahren zur Regelung von Brennstoffzellen mit Kompressoren nach dem Oberbegriff des Anspruchs 1.

Gegenüber den herkömmlichen Brennstoffzellen-Luftversorgungssystemen, die mit relativ niedertourigen Verdrängerkompressoren ausgestattet sind, wird erfindungsgemäß eine zweistufige Verdichtung der Luft mittels reiner, sehr hochtouriger Strömungsverdichter vorgeschlagen. Hierbei bietet sich bei Auslegungsgesamtdruckverhältnissen von über 3 an, Strömungsmaschinen einzusetzen, die ein Zentrifugalfeld erzeugen, wie z. B. die Radialverdichter es können, um hohe spezifische Arbeiten pro Bauvolumen zu bewerkstelligen.

Gegenüber den Verdrängerverdichtern mit den hohen Druckpulsationen besteht bei den Strömungsverdichtem aufgrund der sehr großen Drehzahlunterschieden zu hohen Werten hin nicht nur Bauraumvorteile, sondern durch die kontunierliche Durchströmung der Strömungsmaschinen ergeben sich auch sehr gute Bedingungen für einen geräuscharmen und besonders wirkungsgradgünstigen Betrieb.

Da dem Wasserstoffverbrauch der Brennstoffzelle für die effiziente Bewertung der Fahrleistung die gleiche Bedeutung zukommt als dem Kraftstoffverbrauch beim Verbrennungsmotor, wird der Optimierung des Brennstoffzellen-Luftversorgungssystems genau so eine große Bedeutung beigemessen, wie der Optimierung der Ladungswechseleffizienz des Kolbenmotor., Am Gesamtsystemwirkungsgrad der Brennstoffzelle kann das Luftversorgungssystem gut bis zu einem einem Drittel der Gewichtung ausmachen kann.

Wie aus der europäischen Patentanmeldung EP 1 009 053 A1 ersichtlich, wird dort ebenfalls eine zweistufige Aufladung der Brennstoffzelle vorgesehen, doch wird hier auf einen nachteiligen Verdrängerlader abgehoben, der durch einen Elektromotor angetrieben wird. Die Wirkung bezüglich Geräusch und Wirkungsgraddefizit wird offensichtlich nicht berücksichtigt.

Desweiteren wird in dieser Anmeldung die systemwirkungsgradgünstige Zwischenkühlung nicht erwähnt, obwohl dadurch Größenordnungen von bis 20% Wirkungsgradgewinn des Luftversorgungssystems leicht möglich werden.
Der Hinweis zur Abblasung über ein sogenanntes Überdruckventil nach der Hochdruckstufe gibt Anlass, den formulierte Stand der Technik als eine grobe Vorstufe zu deuten. Die positive Wirkung einer regelbaren wirkungsgradbeeinflussenden Umblasung und die entscheidende Bedeutung dieses regelbaren Elementes für den stabilen Betrieb der Brennstoffzelle, in dem es die Gefahr des Verdichterpumpens bei abgesenkten Durchsätzen verhindert, ist wohl nicht erkannt worden.

Die Aufgabe liegt darin ein Verfahren zur Regelung einer Vorrichtung zur Luftversorgung von Brennstoffzellen mit Kompressoren anzugeben, welches wirkungsgradgünstig und in großen Druckspannen stabil betreibbar ist.

Der Anspruch 1 betrifft die Variabilität der Strömungsquerschnitte nach dem Brennstoffzellen-Ausgang in Verbindung mit dem gewünschten Prozess-Eintrittsdruck der Brennstoffzelle. Sinnvollerweise wird man den variablen engsten Strömungsquerschnitt in die Turbine direkt vor das Turbinenrad mittels eines beweglichen Vorleitgitters legen, um einmal die notwendige Aufstauwirkung für das durchströmende Luft-/Dampfgemisch erzeugen zu können und zum andern wirkungsgradgünstig auf die Rückgewinnung der an der Turbine anstehenden Exergie einzuwirken, um den Hochdruckverdichter effizient anzutreiben und damit Einsparungen bei der elektrischen Energie-Einspeisung am Niederdruckverdichter zu erzielen.

Auf die Einregelung des maximal möglichen Expansionsdruckverhältnisses der Turbine geht der Anspruch 2 ein. Im Hintergrund dieses Regelungsanspruches steht die vorteilhafte Vorstellung, daß der engste Strömungsquerschnitt des gesamten Systems im überwiegenden Betriebsbereich der Brennstoffzelle innerhalb der Turbine liegen soll. Das bedeutet, daß der Massenstrom der Brennstoffzelle hierdurch über die variable Turbine im Zusammenspiel mit der Niederdruck-Energie-Einspeisung bestimmt und maßgebend mitgeregelt wird. Durch dieses Verfahrensmerkmal der Turbinenquerschnittsregelung wird im Bereich der Pumpgrenze auch die Umblaseregelungsphilosophie aus dem Anspruch 9 angesprochen. Durch die Einstellung der maximal möglichen Expansionsdruckverhältnisse an der Turbine wird im besonderen bei den niederen Durchsätzen auch eine weitgehende Entdrosselung am Umblaseventil erreicht, wodurch diese Querschnitte entsprechend der Umblasemenge relativ groß eingeregelt werden und die Verluste damit gering bleiben.

Die Räder des Freiläufers werden schon aus Wirkunggradgründen mit geringern Durchmessern versehen (günstiger Kanalverlauf, geringere Spaltverluste) und sind im allgemeinen bezüglich der maximalen Drehzahlen praktisch nicht eingeschränkt, da funktionsfähige Lagerungen von Turboladern der interessanten Größe Drehzahlen bis 300 000 1/min schon heute serienmäßig abdecken.

Prinzipiell wird der Betriebsbereich eines Strömungsverdichters durch die Pumpgrenze zu den niederen Massendurchsätzen und durch die Stopfgrenze zu den hohen Massendurchsätzen begrenzt.

Kritisch für die Massenstromspanne der Brennstoffzelle bzgl. dem Strömungsverdichter ist der Bereich der niederen Durchsätze, die im allgemeinen zu der erwähnten Pumpproblematik führen. Aus diesem Grunde wurde die Brennstoffzelle mit einer Bypass-Leitung parallel zur Brennstoffzelle mit einem regelbaren Ventil versehen. Hierdurch kann der Verdichtermassenstrom auch bei niedersten Brennstoffzellendurchsätzen um den Umblasemassenstrom, der durch die Ventilöffnung und dem Druckverhältnis über das Ventil bestimmt ist, erhöht werden und auch bei relativ hohen Druckverhältnissen in den stabilen Betriebskennfeldbereichen der beiden Verdichter gehalten werden.

Wenn wir variable Strömungsquerschnitte uni die Turbine ansprechen, so könnten dies Klappen oder Schieber sein, die vor oder auch nach der Turbine plaziert sind und im wesentlichen eine Aufstaufunktion beinhalten. Nachteil ist jedoch die wirkungsgradschädliche Drosselwirkung der an die Aufstaudrücke angepassten Querschnitte. Ausgeschlossen werden sollte auch nicht der Einsatz von Abblaseventilen bei der hier durchgeführten Klassifizierung der betrachteten Varioelemente um und in der Turbine, die sich ebenfalls über einen Aktuator an die elektronische Regelung anschliessen lassen.

Wirklich vorteilhaft wirksam hinsichtlich einer Effizienz und damit bzgl. Energierückgewinn sind jedoch erst die variablen Strömungsquerschnitte innerhalb der Turbine und zwar am besten die im allgemeinen direkt vor dem Turbinenrad angeordneten Vorleitgitter. Deren engste Kanal-Querschnitte werden durch dreh- oder translatorische Bewegungen der Leitschaufeln verändert Hierdurch wird nicht nur die engste Durchströmfläche verändert, sondern auch die Zuströmrichtung zum Turbinenrad, wodurch der Wirkungsgrad der Turbine, bzw. der Energierückgewinn und damit auch der Wirkungsgrad des Gesamtsystems merklich beeinflusst werden kann. Der variablen Turbine kommt im Rahmen der Verfahrensansprüche eine sehr große Bedeutung zu, da damit die gewünschten Prozesseintrittsdrücke der Brennstoffzelle im Verbindung mit den Verdichterstufen genau und wirkungsgradgünstig einregelbar sind.

Da das Austrittsprodukt der Brennstoffzelle Wasserdampf und Luft darstellt, macht es aus energetischer Sicht Sinn den Kondensator nach der Turbine zu platzieren, wie aus dem Anspruch 5 zu entnehmen ist. Die Trennung von Luft und Wasser wird durchgeführt, wobei eine Weiterverwertung des Wassers sich anbietet.

Die Nutzung des Wassers ist für Kühlzwecke von Komponenten, z. B. den Elektromotoren, genauso denkbar wie für die Scheibenwaschanlage. Bei Sonderanwendungen, z. B. bei Fahrzeuge für den Wüsteneinsatz, ließe sich das Wasser auch einer Trinkwasser-Aufbereitungsvorrichtung zuführen. Bei Camping-Fahrzeugen wäre das konditionierte, bzw. unkonditionierte Wasser zum Kochen oder auch für Wasch-, bzw. Toilettenzwecke nutzbar. Unabhängig von der Nutzung des erzeugten Wassers ließe sich das gesamte oder zumindest ein Teil davon in einem Tank abspeichern, bevor über die Weiterverwendung entschieden wird.

Um innerhalb des Kondensators einen vorteilhaften Unterdruck zur Entwässerung zu bewirken, könnte am Kondensatoraustritt der Luftseite in Verbindung mit der Wasserseite ein entsprechender Diffusor Nutzen bringen. Der Erosionsgefahr am Turbinenrad durch Wasserschlag, im besonderen im Radeintrittsbereich, kann durch verschleißfeste Werkstoffe der Räder oder Oberflächenbeschichtungen entgegnet werden. Da die Temperaturschwankungen in der Turbine nicht sonderlich hoch sind, ist der Einsatz von Keramiken als Radwerkstoff oder Beschichtungsmaterial in diesem Zusammenhang von der Rissanfälligkeit der Keramiken völlig unkritisch.

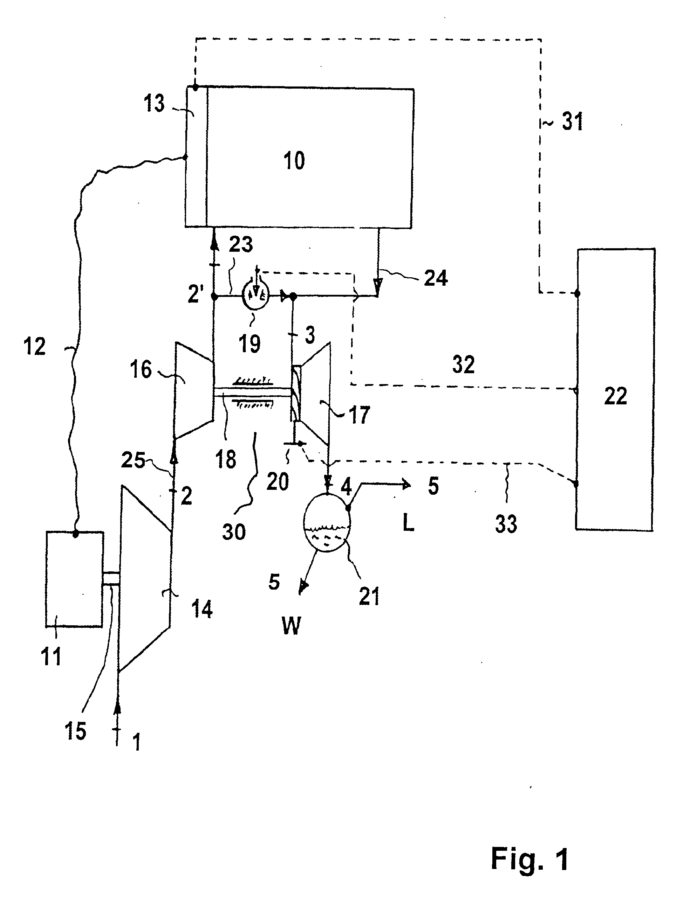

Ein Großteil der Merkmale des Brennstoffzellen-Luftversorgungssystems zur Umsetzung des Verfahrens lässt sich aus der Prinzipschaltungsskizze Fig. 1 entnehmen.

Aus der Umgebung wird gefilterte Luft durch den Niederdruckverdichter (14) mit dem Zustand 1 angesaugt. Das Verdichterrad des Niederdruckverdichters (14) steht über eine Antriebswelle (15) mit dem Elektromotor (11) in Verbindung, der das wesentliche Aggregat darstellt, um Energie über den Niederdruckverdichter in die Luftströmung und damit in das gesamte System der Brennstoffzellen-Luftversorgung einzuspeisen. Die Energiezuführung erfolgt entweder direkt aus der Brennstoffzelle (10) oder aus dem Stromspeicher (13) über die Kabel (12). Der totale Zustandspunkt 2 nach dem Niederdruckverdichter ist praktisch durch diese Einspeise-Energiemenge des Elektromotors geprägt.

Ein Element, das in der Übersichtsskizze nicht eingezeichnet ist, ist ein Zwischenkühler, der auf jeden Fall eingesetzt wird, wenn der Wasserstoffverbrauch hinsichtlich niederer Verbräuche optimiert werden soll. Zum andern kann es eine Notwendigkeit sein, daß die Eintrittstemperatur der Zelle unterhalb eines Wertes bleiben muß, um die mechanische Haltbarkeit der Membran nicht zu gefährden. Die Zwischenkühlung führt zu einer Begünstigung einer reduzierten Leistungsaufnahme des Hochdruckverdichters (16), da die Leistungsaufnahme direkt proportional zu

Nach der Turbine (17) erfährt das Gemisch Luft-Wasserdampf-Wasser den temperaturreduzierten Zustandspunkt 4 vor dem Kondensator (21).

Im Kondensator (21) erfolgt die Trennung der Wasseranteile von der Luft, die dann über eigene Austrittsöffnungen des Kondensators 5L und 5W in das nachfolgende Austrittsrohrsystem der Luftversorgungseinrichtung wegströmen. Im Austrittsrohrsystem können sich Elemente befinden, die für einen Unterdruck' des Kondensators sorgen und für die Weiternutzung des Kondensats zuständig sind.

Der Kernintelligenz zur Nutzung des Brennstoffzellen-Luftsystem steckt im Regler (22), der die drei regelbaren Komponenten: Elektromotor mit den Signalen (31), das Umblaseventil (19) mit den Signalen 32 und ggf. die Varioelernente bzgl der Turbine (17) mit den Signalen (33) im Zusammenspiel optimal führen soll. Wie bei den Verbrennungsmotoren üblich, wird der Regler (22) auch bei der Brennstoffzelle dazu im allgemeinen mit hinterlegten elektronischen Daten versehen, um bei den angefahrenen Betriebspunkten eine optimale Einstellung, bzw. Kombination der betreffenden Aktuatorpositionen zu bewirken.

## Patentansprüche

1. Verfahren zur Regelung einer Vorrichtung zur Luftversorgung von Brennstoffzellen mit Kompressoren, wobei ein Strömungsverdichter (14) niederdruckseitig mit einem Elektromotor (11) verbunden ist, wobei ein weiterer in Reihe nachgeschalteter Hochdruckverdichter (16) der Strömungsmaschinenbauart mit einer Turbine (17) als Freiläufer (30) fest gekoppelt ist, die mit der Austrittsverrohrung (24) der Brennstoffzelle (10) verbunden ist, wobei nach dem Hochdruckverdichter (16) vor der Brennstoffzelle (10) eine Verbindungsleitung (23) zur Austrittsverrohrung (24) der Brennstoffzelle (10) führt, in die ein regelbares Ventil (19) eingebracht ist, und wobei im Bereich um die Turbine (17) des Freiläufers (30) oder innerhalb der Turbine (17) variable Elemente bzgl. der Strömungsquerschnitte vorliegen, die über die Betätigungseinrichtung (20) mit einer Regelung koppelbar sind,
**dadurch gekennzeichnet,**
**daß** der variable engste Querschnitt im Bereich um die Turbine (17) oder innerhalb der Turbine (17) entsprechend dem vorhandenen Massenstrom und der Turbineneintrittstemperatur mittels der Betätigungseinrichtung (20) in Abhängigkeit vom Regelungssignal (33) derart geregelt verändert wird, daß sich der Soll-Eintrittsluftdruck der Brennstoffzelle (17) einstellen kann.

2. Verfahren zur Regelung einer Vorrichtung zur Luftversorgung von Brennstoffzellen mit Kompressoren, wobei ein Strömungsverdichter (14) niederdruckseitig mit einem Elektromotor (11) verbunden ist, wobei ein weiterer in Reihe nachgeschalteter Hochdruckverdichter (16) der Strömungsmaschinenbauart mit einer Turbine (17) als Freiläufer (30) fest gekoppelt ist, die mit der Austrittsverrohrung (24) der Brennstoffzelle (10) verbunden ist, wobei nach dem Hochdruckverdichter (16) vor der Brennstoffzelle (10) eine Verbindungsleitung (23) zur Austrittsverrohrung (24) der Brennstoffzelle (10) führt, in die ein regelbares Ventil (19) eingebracht ist, und wobei im Bereich um die Turbine (17) des Freiläufers (30) oder innerhalb der Turbine (17) variable Elemente bzgl. der Strömungsquerschnitte vorliegen, die über die Betätigungseinrichtung (20) mit einer Regelung koppelbar sind,
**dadurch gekennzeichnet,**
**daß** der variable engste Querschnitt im Bereich um die Turbine (17) oder innerhalb der Turbine (17) entsprechend dem vorhandenen Massenstrom und der Turbineneintrittstemperatur mittels der Betätigungseinrichtung (20) in Abhängigkeit vom Regelungssignal (33) derart geregelt verändert wird, daß sich das maximal mögliche Expansionsverhältnis über der Turbine (17) einstellen kann.
